# EUROPEAN PATENT APPLICATION

(11) **EP 4 628 176 A1**
(43) Date of publication of application: **08.10.2025**
(21) Application number: 25164773.1
(22) Date of filing: 19.03.2025
(51) Int. Cl.: A63F 13/5372, A63F 13/5255, A63F 13/847

(54) **DATA PROCESSING APPARATUS, SYSTEM AND METHOD**

(30) Priority: 04.04.2024 GB 202404798
(71) Applicant: Sony Interactive Entertainment Inc., Tokyo 108-0075 (JP)
(72) Inventor: LEUNG, Jun Yen, London, W1F 7LP (GB); CONNOR, Patrick John, London, W1F 7LP (GB); MONTI, Maria Chiara, London, W1F 7LP (GB); GREEN, Lawrence Martin, London, W1F 7LP (GB); CERRATO, Maurizio, London, W1F 7LP (GB); GUPTA, Rajeev, London, W1F 7LP (GB)
(74) Representative: D Young & Co LLP

(57) **Abstract**

A data processing apparatus comprising circuitry configured to: receive, for each of one or more first users of a video game, attention data indicative of a region of attention of each first user in a respective first video image of the video game; determine, based on the attention data, an object of attention in the video game of the one or more first users; and generate rendering control data to control, in a second video image of the video game generated for a second, different, user of the video game, rendering of the object of attention with a characteristic distinguishing the object of attention from other objects rendered in the second video image.

## Description

### BACKGROUND

### Field of the Disclosure

This disclosure relates to a data processing apparatus, system and method.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

In order to balance the need for efficient use of processing resources and a high quality experience for users of video games, there is existing technology that optimises rendering of video game graphics based on where the user is looking and/or where the user is expect to look.

For example, gaze tracking can be used to check where the user is looking on a screen and render the graphics of that part of the screen at a higher level of detail (LOD). Other techniques such as those using appropriate heuristics (e.g. to allow rendering objects near a crosshair at higher LOD in first-person-shooter (FPS) games) may also be used.

A problem, however, is that these existing techniques are often slightly too slow. For example, if using gaze tracking to determine which part of the screen the user is looking at, the player's gaze may be moving faster than the information can be acted upon. There is thus not enough time for the higher LOD rendering to be completed before the user has stopped looking at the relevant part of the screen. Furthermore, applying heuristics is often an oversimplified approach which does not perform well in more complex gaming situations (e.g. if an enemy character appears but is not currently near the crosshair, they may not be rendered with a higher LOD even though this may be highly desirable to ensure they are noticed by the user).

There is therefore a desire to alleviate these problem(s).

### SUMMARY

The present technology is defined by the claims.

### BRIEF DESCRIPTION OF THE DRAWINGS

Non-limiting embodiments and advantages of the present disclosure are explained with reference to the following detailed description taken in conjunction with the accompanying drawings, wherein:
Fig. 1 schematically shows an example entertainment system;
Figs. 2A and 2B schematically show example components associated with the entertainment system;
Fig. 3 schematically shows a position of virtual cameras associated with different respective users;
Figs. 4A to 4C schematically show rendered images associated with the virtual cameras;
Fig. 5 schematically shows rays associated with some of the virtual cameras;
Figs. 6A to 6C schematically show adjusted versions of the rendered images;
Figs. 7A and 7B schematically show additional examples;
Fig. 8 schematically shows an example system; and
Fig. 9 shows an example method.

Like reference numerals designate identical or corresponding parts throughout the drawings.

### DETAILED DESCRIPTION OF THE EMBODIMENTS

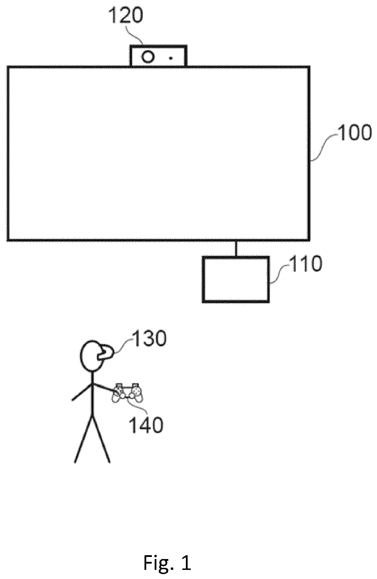

Fig. 1 schematically illustrates an entertainment system suitable for implementing one or more of the embodiments of the present disclosure. Any suitable combination of devices and peripherals may be used to implement embodiments of the present disclosure, rather than being limited only to the configuration shown.

A display device 100 (e.g. a television or monitor), associated with a games console 110, is used to display content to one or more users. A user is someone who interacts with the displayed content, such as a player of a game, or, at least, someone who views the displayed content. A user who views the displayed content without interacting with it may be referred to as a viewer. This content may be a video game, for example, or any other content such as a movie or any other video content. The games console 110 is an example of a content providing device or entertainment device; alternative, or additional, devices may include computers, mobile phones, set-top boxes, and physical media playback devices, for example. In some embodiments the content may be obtained by the display device itself - for instance, via a network connection or a local hard drive.

One or more video and/or audio capture devices (such as the integrated camera and microphone 120) may be provided to capture images and/or audio in the environment of the display device. While shown as a separate unit in Fig. 1, it is considered that such devices may be integrated within one or more other units (such as the display device 100 or the games console 110 in Fig. 1).

In some implementations, an additional or alternative display device such as a head-mountable display (HMD) 130 may be provided. Such a display can be worn on the head of a user, and is operable to provide augmented reality or virtual reality content to a user via a near-eye display screen. A user may be further provided with a video game controller 140 which enables the user to interact with the games console 110. This may be through the provision of buttons, motion sensors, cameras, microphones, and/or any other suitable method of detecting an input from or action by a user.

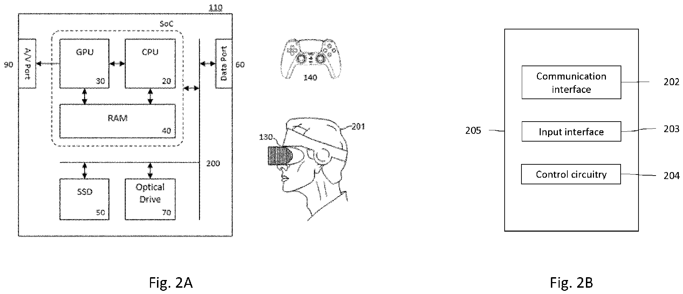

Fig. 2A shows an example of the games console 110. The games console 110 is an example of a data processing apparatus.

The games console 110 comprises a central processing unit or CPU 20. This may be a single or multi core processor, for example comprising eight cores. The games console also comprises a **graphical** processing unit or GPU 30. The GPU can be physically separate to the CPU, or integrated with the CPU as a system on a chip (SoC).

The games console also comprises random access memory, RAM 40, and may either have separate RAM for each of the CPU and GPU, or shared RAM. The or each RAM can be physically separate, or integrated as part of an SoC. Further storage is provided by a disk 50, either as an external or internal hard drive, or as an external solid state drive (SSD), or an internal SSD.

The games console may transmit or receive data via one or more data ports 60, such as a universal serial bus (USB) port, Ethernet ^{®} port, WiFi ^{®} port, Bluetooth ^{®} port or similar, as appropriate. It may also optionally receive data via an optical drive 70.

Interaction with the games console is typically provided using one or more instances of the controller 140. In an example, communication between each controller 140 and the games console 110 occurs via the data port(s) 60.

Audio/visual (A/V) outputs from the games console are typically provided through one or more A/V ports 90, or through one or more of the wired or wireless data ports 60. The A/V port(s) 90 may also receive audio/visual signals output by the integrated camera and microphone 120, for example. The microphone is optional and/or may be separate to the camera. Thus, the integrated camera and microphone 120 may instead be a camera only. The camera may capture still and/or video images.

Where components are not integrated, they may be connected as appropriate either by a dedicated data link or via a bus 200.

As explained, examples of a device for displaying images output by the game console 110 are the display device 100 and the HMD 130. The HMD is worn by a user 201. In an example, communication between the display device 100 and the games console 110 occurs via the A/V port(s) 90 and communication between the HMD 130 and the games console 110 occurs via the data port(s) 60.

The controller 140 is an example of a peripheral device for allowing the games console 110 to receive input from and/or provide output to the user. Examples of other peripheral devices include wearable devices (such as smartwatches, fitness trackers and the like), microphones (for receiving speech input from the user) and headphones (for outputting audible sounds to the user).

Fig. 2B shows some example components of a peripheral device 205 for receiving input from a user. The peripheral device comprises a communication interface 202 for transmitting wireless signals to and/or receiving wireless signals from the games console 110 (e.g. via data port(s) 60) and an input interface 203 for receiving input from the user. The communication interface 202 and input interface 203 are controlled by control circuitry 204.

In an example, if the peripheral device 205 is a controller (like controller 140), the input interface 203 comprises buttons, joysticks and/or triggers or the like operable by the user. In another example, if the peripheral device 205 is a microphone, the input interface 203 comprises a transducer for detecting speech uttered by a user as an input. In another example, if the peripheral device 205 is a fitness tracker, the input interface 203 comprises a photoplethysmogram (PPG) sensor for detecting a heart rate of the user as an input. The input interface 203 may take any other suitable form depending on the type of input the peripheral device is configured to detect.

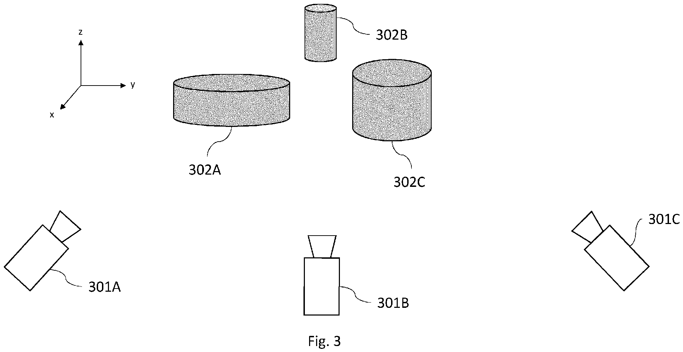

Fig. 3 shows an example of objects 302A, 302B and 302C in a three-dimensional (3D) virtual world enabled by the execution of appropriate code by the CPU 20 and/or GPU 30. The virtual world is that of a video game, for example, and each position in the virtual world is denoted by 3D coordinates (x, y, z).

Each video game player in the virtual world is associated with a respective virtual camera 301A, 301B and 301C. In an example, each video game player is playing the game on their own respective instance of games console 110 (with each games console executing the code enabling the virtual world). The plurality of instances of games console 110 communicate with each other (e.g. over a network via their respective data ports 60) to enable a network multi-player gaming experience. Each instance of the games console 110 outputs video game images to a respective electronic display (e.g. display device 100 and/or the near-eye display screen of HMD 130) for viewing by its respective user.

Each virtual camera transforms the 3D positions in the virtual world within the field of view of the virtual camera to corresponding 2D positions in the 2D image captured by that camera. This is achieved using extrinsic and intrinsic camera parameters. The extrinsic camera parameter is a matrix which transforms the 3D positions of the world coordinate system (x, y, z) into those of a 3D camera coordinate system (depending on the position and orientation of the virtual camera in the world coordinate system). The intrinsic camera parameters are matrices which transform the 3D positions of the camera coordinate system into those of the 2D camera image and, finally, to 2D pixel positions corresponding to the pixels seen by the user on their electronic display. The extrinsic and intrinsic camera matrices (together with associated concepts such as depth buffering to ensure any occlusion of objects occurs correctly in the 2D camera image) are known in the art and thus not described in detail here.

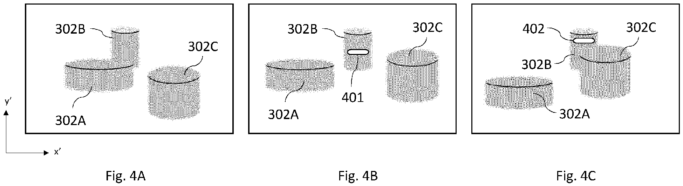

This is exemplified (in a simplified way) in Figs. 4A, 4B and 4C which show, respectively, the 2D images rendered for the virtual cameras 301A, 301B and 301C. The 2D coordinate system (representing pixel position) of the rendered images is denoted (x', y'). Due to the different positions of each of the virtual cameras (and thus different field of view of each camera), the objects 302A, 302B and 302C are projected to different 2D positions in each 2D image. In particular, the position of virtual camera 301A in Fig. 3 means the object 302A partially occludes the object 302B in the 2D image captured by that camera and the position of virtual camera 301C in Fig. 3 means the object 302C partially occludes the object 302B in the 2D image captured by that camera. On the other hand, the position of virtual camera 301B means all objects 302A-C can be seen in the 2D image captured by that camera (that is, there are no occlusions).

In the examples of Figs. 4A-C, each object has been rendered with a same, first level of detail (LOD). LOD relates to the complexity of rendering an object, with higher LOD meaning the rendering is more complex (meaning the object may look more detailed and/or realistic but the computational cost of the rendering is higher) and lower LOD meaning the rendering is less complex (meaning the object may look less detailed and/or realistic but the computational cost of the rendering is higher). For efficient use of processing resources, more salient objects in the game may be rendered with a higher LOD whereas less salient objects in the game may be rendered with a lower LOD. This allows important objects (which the user is more likely to notice) to be rendered in more detail whereas less important objects (which the user is less likely to notice) to be rendered in less detail (thereby saving computational resources).

There are many known techniques for altering appropriate part(s) of the graphics pipeline (executed by the GPU 30, for example) to adjust the LOD of a particular rendered object. These may include adjustments to geometry detail and/or shading, for example. Such known techniques are not discussed in detail here but it will be appreciated that any such technique(s) may be used as appropriate for adjusting the LOD with which an object is rendered.

A problem, however, is how to determine which objects are more salient (important) and which are less salient (less important). As previously described, existing techniques relying on gaze tracking of individual users (so an object the user is looking at is rendered with higher LOD than objects they are not looking at) have the drawback that, by the time it has been determined (through the gaze tracking) which object the user is looking at and the process for increasing the rendering LOD is executed, the user may have already started to look at another object. Furthermore, other techniques using (for example) simple heuristics are often not appropriate for more complex games.

The present technology thus considers not only an individual player's attention (e.g. through gaze tracking or the like) but that of multiple players. This is exemplified in Figs. 4B and 4C, which shows that the players associated with virtual cameras 301B and 301C are both focussing their attention on the object 302B. This is indicated by the gaze tracking indicator 401 (determined based on gaze tracking of the player associated with virtual camera 301B) and gaze tracking indicator 402 (determined based on the gaze tracking of the player associated with virtual camera 301C). The players (users) associated with virtual cameras 301A, 301B and 301C may be referred to as players A, B and C, respectively. The gaze tracking indicators 401 and 402 indicate regions of attention of Players B and C on the output images of Figs. 4B and 4C. In practice, the gaze tracking indicators 401 and 402 may not actually be displayed. The object 302B positioned at the regions of attention indicated by indicators 401 and 402 may be referred to as an object of attention (since players B and C are paying attention to this object) or an object of interest.

The gaze tracking occurs via any suitable known technique and may be based on images of each user's eye(s) captured by a camera (e.g. that of integrated camera and microphone 120 or a camera (not shown) integrated in HMD 130). The gaze tracking uses, for example, a predetermined relationship (e.g. determined through a calibration process before the video game starts) between eye position in a captured image of the user and the portion of the screen the user's eye(s) are paying attention to at that eye position. The gaze tracking indicators 401 and 402 are examples of such a portion of the screen and the position of each of these portions (e.g. the pixel position at the centre of the each indicator 401 and 402) may be referred to as a gaze position. Once the 2D gaze position (in pixel coordinates (x', y')) is known, this can be mapped to a corresponding ray in the 3D virtual world (in world coordinate system (x, y, z)) using the inverses of the extrinsic and intrinsic camera parameter matrices.

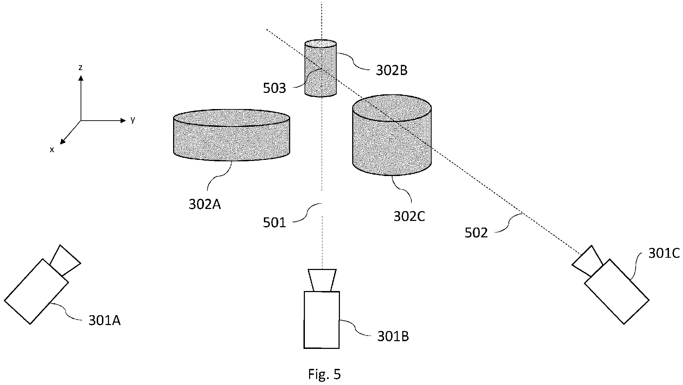

This is shown in Fig. 5, which shows ray 501 projected into the 3D virtual world from the gaze position corresponding to indicator 401 and ray 502 projected into the 3D virtual world from the gaze position corresponding to indicator 402. The rays 501 and 502 cross each other at point 503 in the 3D virtual world, which is a position at which the object 302B is located. It is thus determined that both Players B and C are focussing their attention on object 302B. Object 302B is thus determined as an object of interest that should be rendered in a higher LOD for all players.

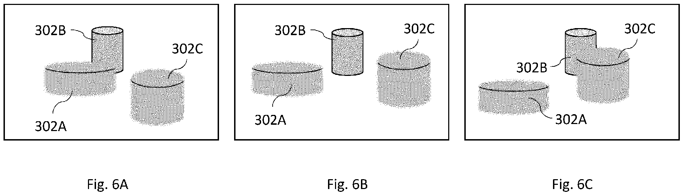

This is exemplified in Figs. 6A, 6B and 6C, which show the same rendered 2D scene as Figs. 4A, 4B and 4C, respectively, but in which the object 302B has been rendered at a higher LOD than the objects 302A and 302C (which remain rendered at the original, lower, LOD). Notably, the object 302B is rendered at the higher LOD for Player A (associated with virtual camera 301A and the 2D rendered images of Figs. 4A and 6A) even though gaze tracking for Player A was not used to determine object 302B as an object of interest. This means that, when object 302B is rendered for Player A, it is rendered at a higher LOD with a reduced delay compared to relying on individual gaze tracking for Player A only.

The present technology thus allows objects of interest to be inferred by the gaze behaviour of a first set of player(s) to allow such objects to be rendered at a higher LOD for a second set of player(s) even if the gaze behaviour of the second set of player(s) has not (or, at least, not yet) been considered. This reduces the perceived delay in higher LOD rendering of objects of interest for the second set of player(s). As this technique is applied for all players over time during a game as they move around a map and pay attention to different objects, the effect is that each object will be rendered at an appropriate LOD depending on the overall level of interest for that object among the players. The delays associated with determining the rendering LOD of objects according to gaze tracking of users on an individual basis are therefore alleviated. At the same time, the selection of objects which should be rendered at a higher LOD automatically takes into account what the players appear to consider as objects of interest (based on what they are looking at), thereby helping determine a more appropriate LOD for each object than existing techniques (e.g. those based purely on simple heuristics) which are less able to account for actual player behaviour.

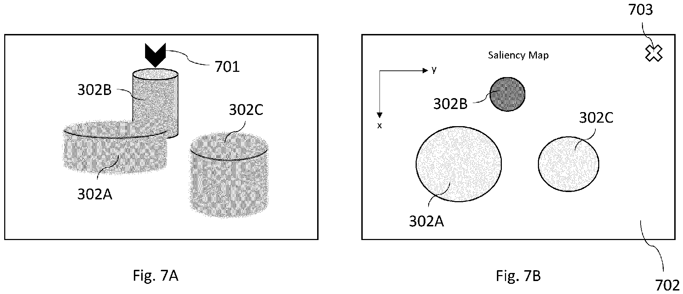

Figs. 7A and 7B show some further examples of the present technique.

Fig. 7A shows a marker 701 which appears above object 302B to indicate object 302B as an object of interest in the 2D image rendered for each of the virtual cameras (although, in this example, for simplicity, only the 2D image rendered for virtual camera 301A is shown). One or more such markers 701 may be used to indicate one or more respective objects of interest. An object becomes an object of interest, for example, when the gaze of a predetermined number of players in the game falls on the object within a predetermined time period of each other and/or for a predetermined time period. Objects of interest (e.g. objects to be interacted with or objects posing an in-game danger to players) can thus be determined based on what players in the game are looking at and highlighted to all players (including those whose gaze has not yet fallen on the object) to facilitate gameplay. In an example, this is in addition to rendering the object at a higher LOD. In another example, object(s) of interest may be rendered at the same LOD (e.g. original, lower, LOD) as the other objects but nonetheless provided with marker(s) 701 to indicate them as objects of interest.

Fig. 7B shows a saliency map 702 (represented by map data) indicating the extent to which the gaze of players of the game has fallen on different objects as the game progresses. The saliency map, in this example, is a bird's eye view of the game map (a 2D map in the x-y plane of 3D virtual world of Figs. 3 and 5) viewable by any player during the game (e.g. by selecting a particular option from an in-game interactive menu, not shown). In this example, the more time the gaze of any player falls on a particular object during gameplay (e.g. any object at a position along the ray associated with that player's gaze), the more salient that object is considered. More salient objects appear with one or more different visual characteristics to less salient objects. In this example, object 302B is more salient than objects 302A and 302C so appears darker on the saliency map 702. In an example, more salient objects may be controlled to appear in a different colour (e.g. red for the most salient object(s), green for the least salient object(s) and appropriate hues in between for the remaining objects), in a darker shade and/or with different levels of transparency (e.g. with the most salient object(s) appearing opaque, the least salient object(s) appearing transparent and appropriate levels of transparency in between for the remaining objects). The saliency map 702 thus provides an additional way for a player to determine which object(s) are likely to be of most relevance in the game based on what other players in the game are looking at. A player is able to return to normal gameplay from the saliency map by selecting the close icon 703.

The above examples thus demonstrate how the gaze of a first set of player(s) can be used to determine the saliency of object(s) in a video game and control the LOD with which those object(s) are rendered and/or the indication of those object(s) for a second set of player(s) without having to rely on tracking and processing the gaze of that second set of player(s). Delays in rendering objects with an appropriate LOD and/or indication are thus alleviated and the saliency of objects is determined based on what players are actually looking at (rather than based on more generic and less accurate heuristics).

In general, the saliency of an object refers to how important of object is considered to be for players in a game. An object of interest has a higher saliency than an object not considered an object of interest.

In an example, there a plurality of levels of saliency, each associated with a different amount of attention from players. For example, there may be two levels of saliency, a first, lower, level and a second, higher, level. At the start of gameplay, all objects are at the first saliency level for all players. During gameplay, objects move to the second saliency level for all players if, based on gaze tracking, they receive sufficient attention. Sufficient attention involves, for example, the object being at a position along a ray corresponding to the gaze of each of a predetermined threshold number of players (e.g. one or more players) within a predetermined time period (first predetermined time period) and/or for a predetermined time period (second predetermined time period).

For example, an object may be moved from the first saliency level to the second saliency level (thereby becoming an object of interest) if it is at a position along the rays of the gaze of two players (this being the threshold number of players, in this example) within 5 seconds of each other (this being the first predetermined time period, in this example) for at least 2 seconds for each player (this being the second predetermined time period, in this example). To use the example of Fig. 5, this means object 302B would be moved to the second saliency level if ray 502 falls on a position at which object 302B is located (e.g. a position within the mesh defining object 302B) within 5 seconds of ray 501 falling on a position at which object 302B is located and each of the rays 501 and 502 remain at a position at which object 302B is located for at least 2 seconds. Once at the second saliency level, it is rendered at a higher LOD and/or provided with an indicator (such as marker 701). The indicator may be visual (as in marker 701) or may take another form (e.g. an audio prompt such as "On your left!" or "Look ahead!").

In another example, there may be more than two levels of saliency, with each level of saliency associated with a different LOD and/or indicator. For instance, there may be three levels of saliency, these being a first, lowest, level, a second, medium, level and a third, highest, level. The first level (which applies to all objects at the start of gameplay) may be associated with a lowest LOD, the second level may be associated with a medium LOD and the third level may be associated with a highest LOD (optionally, with an indicator). A different predetermined number of players and/or timings may be associated with each level.

For instance, an object may again be moved from the first saliency level to the second saliency level (thereby becoming an object of interest) if it is at a position along the rays of the gaze of two players with 5 seconds of each other for at least 2 seconds for each player. That object, however, may be moved to the third saliency level if it is at a position along the rays of the gaze of more than two players within 5 seconds of each other for at least 2 seconds for each player. Alternatively, or in addition, the object may be moved to the third saliency level if it is at a position along the rays of the gaze of only two players but within 3 seconds of each other for at least 3 seconds for each player. It will be appreciated that the predetermined number of players and/or timings may be adjusted as appropriate depending on the video game, video game difficulty level or the like, thereby providing appropriate flexibility to players and/or developers.

Other timing conditions could also be used. For example, instead of, or in addition to, considering the amount of time for which the ray of the gaze of each player falls at a position of an object (e.g. 2 or 3 seconds for each player, as exemplified above), the amount of time for which the rays of the gazes of a predetermined number of players simultaneously fall at a position of the object may be considered. Thus, for instance, an object may only be moved from a first, lower, saliency level to a second, higher, saliency level if the gazes of, say, at least two players simultaneously remain on that object for more than a third predetermined time period (e.g. 2 seconds).

In examples of team-based games (where a first team of players competes against a second team of players, such as in certain multi-player FPS games), objects are only moved between different saliency levels (and thus rendered with different LODs and/or indicators) if the predetermined number of players for causing such movement (with appropriate timings) is satisfied by players on the same team. Corresponding different rendering LODs and/or indicators are then only provided for players on the same team (each player / character being associated with team identifier data indicating the team the player / character is on). This helps prevent players on one team from using LOD and/or indicator information to determine what the players on an opposing team are paying attention to (thereby alleviating any unfair advantage arising from the use of such LOD and/or indicator information).

In an example, once an object has been rendered at a higher LOD and/or with an indicator, the higher LOD and/or indicator is associated with a unique identifier of the object (each object having a unique identifier in the 3D virtual world, for example) and retained for the object even if it moves to different locations in the 3D virtual world. This allows highly salient moving objects (e.g. enemy characters) to continue to be rendered at a higher LOD and/or with appropriate indicator(s) even if they move around the 3D virtual world after having been subjected to sufficient attention by relevant players in the video game.

In an example, the gaze tracking data (including data indicating the ray associated with the current gaze tracking position on the output rendered 2D image) obtained by the games console 110 of each player is transmitted to the games console 110 of each of the other players and/or to a server to enable each games console 110 to determine the rendering LOD of each object and/or whether or not a particular object is to be associated with an indicator. The determining of the saliency of each object in the way(s) described may be performed by one of the games consoles and/or by a server and communicated to each of the games consoles.

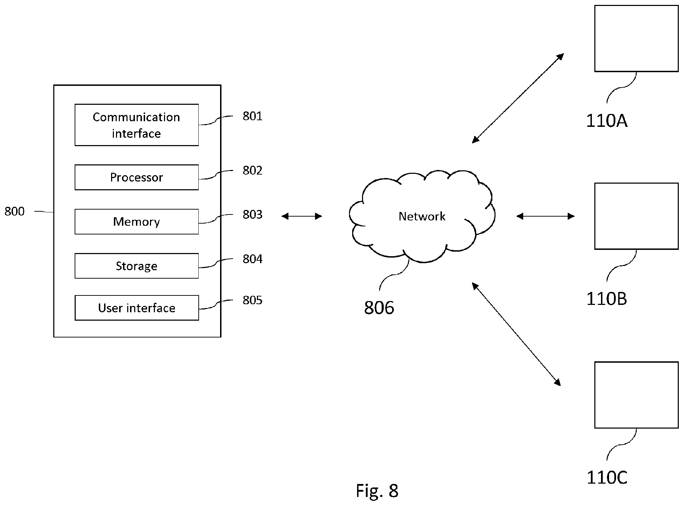

Fig. 8 shows an example in which a server 800 receives gaze tracking data from each of a plurality of games consoles 110A, 110B and 110C over a network 806, performs the determination of the saliency of each object in the way(s) described and transmits, to each games console, information indicating the saliency of each object and/or information indicating the rendering LOD of each object and/or information indicating whether or not each object is to be associated with an indicator (such as marker 702). Such information may be referred to as rendering control data. The server 800 and games consoles 110A, 110B and 110C form a system.

The server 800 is another example of a data processing apparatus and comprises a communication interface 801 for sending electronic information to and/or receiving electronic information from one or more other apparatuses, a processor 802 for executing electronic instructions, a memory 803 (e.g. volatile memory) for storing the electronic instructions to be executed and electronic input and output information associated with the electronic instructions, a storage medium 804 (e.g. non-volatile memory) for long term (persistent) storage of information and a user interface 805 (e.g. a touch screen, a non-touch screen, buttons, a keyboard and/or a mouse) for receiving commands from and/or outputting information to a user. Each of the communication interface 801, processor 802, memory 803, storage medium 804 and user interface 805 are implemented using appropriate circuitry, for example. The processor 802 controls the operation of each of the communication interface 801, memory 803, storage medium 804 and user interface 805. The server 800 is connected over a network 806 (e.g. the internet) to the plurality of games consoles 110A, 110B and 110C (each of which has the previously-described features of games console 110). The server 800 connects to the network 806 via the communication interface 601 and each games console 110A, 110B and 110C connects to the network 806 via its respective data port(s) 60, for example.

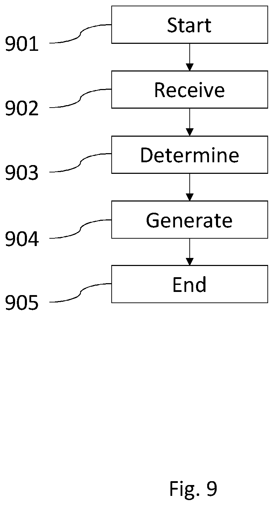

Fig. 9 shows an example method. The method is executed by the processor 802 of server 800 and/or the CPU 20 and/or GPU 30 of games console 110, for example.

The method starts at step 901.

At step 902, for each of one or more first users of a video game (e.g. the users associated with virtual cameras 301B and 301C), attention data (e.g. gaze position data) is received indicative of a region of attention of each first user in a respective first video image (e.g. the images of Figs. 4B and 4C) of the video game.

At step 903, based on the attention data, an object of attention (e.g. object 302B) in the video game of the one or more first users is determined.

At step 904, rendering control data is generated to control, in a second video image (e.g. the image of Fig. 6A) of the video game generated for a second, different, user of the video game (e.g. the user associated with virtual camera 301A), rendering of the object of attention with a characteristic distinguishing the object of attention from other objects rendered in the second video image. For example, the characteristic may comprise an LOD of the object of attention (so that the object of attention is rendered at a higher LOD) and/or the characteristic may comprise an indicator (e.g. marker 701) indicating the object of attention.

The method ends at step 905.

Example(s) of the present technique are defined by the following numbered clauses:
1. A data processing apparatus comprising circuitry configured to:
   receive, for each of one or more first users of a video game, attention data indicative of a region of attention of each first user in a respective first video image of the video game;
   determine, based on the attention data, an object of attention in the video game of the one or more first users; and
   generate rendering control data to control, in a second video image of the video game generated for a second, different, user of the video game, rendering of the object of attention with a characteristic distinguishing the object of attention from other objects rendered in the second video image.
2. A data processing apparatus according to clause 1, wherein the characteristic comprises a level of detail, LOD, of the object of attention.
3. A data processing apparatus according to clause 1 or 2, wherein the characteristic comprises an indicator indicating the object of attention.
4. A data processing apparatus according to any preceding clause, wherein the attention data comprises a gaze position of each of the one or more first users.
5. A data processing apparatus according to clause 4, wherein the object of attention is an object in a three-dimensional, 3D, virtual world of the video game positioned along one or more rays associated with the respective gaze positions of the one or more first users.
6. A data processing apparatus according to clause 5, wherein the object in the 3D virtual world of the video game is determined to be the object of attention when positioned along each of the one or more rays within a first predetermined time period.
7. A data processing apparatus according to clause 5 or 6, wherein the object in the 3D virtual world of the video game is determined to be the object of attention when positioned along each of the one or more rays for at least a second predetermined time period.
8. A data processing apparatus according to any one of clauses 5 to 7, wherein the object in the 3D virtual world of the video game is determined to be the object of attention when simultaneously positioned along each of the one or more rays for at least a third predetermined time period.
9. A data processing apparatus according to any one of clauses 5 to 8, wherein the object in the 3D virtual world of the video game is determined to be the object of attention when the number of first users is at least a predetermined threshold number.
10. A data processing apparatus according to any preceding clause, wherein:
   based on the attention data, the object of attention is assigned to one of a plurality of object salience levels; and
   the characteristic is different for different object salience levels.
11. A data processing apparatus according to clause 10, wherein the circuitry is configured to generate map data representing a map of the 3D virtual world and an object salience level of each of a plurality of objects of the 3D virtual world.
12. A system comprising:
   a data processing apparatus according to any preceding clause;
   one or more second data processing apparatuses each associated with a respective one of the one or more first users; and
   a third data processing apparatus associated with the second user; wherein the data processing apparatus is configured to:
      receive the attention data from each of the one or more second data processing apparatuses; and
      transmit the rendering control data to the third data processing apparatus.
13. A computer-implemented data processing method comprising:
   receiving, for each of one or more first users of a video game, attention data indicative of a region of attention of each first user in a respective first video image of the video game;
   determining, based on the attention data, an object of attention in the video game of the one or more first users; and
   generating rendering control data to control, in a second video image of the video game generated for a second, different, user of the video game, rendering of the object of attention with a characteristic distinguishing the object of attention from other objects rendered in the second video image.
14. A program for controlling a computer to perform a method according to clause 13.
15. A computer-readable storage medium storing a program according to clause 14.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

## Claims

1. A data processing apparatus comprising circuitry configured to:
receive, for each of one or more first users of a video game, attention data indicative of a region of attention of each first user in a respective first video image of the video game;
determine, based on the attention data, an object of attention in the video game of the one or more first users; and
generate rendering control data to control, in a second video image of the video game generated for a second, different, user of the video game, rendering of the object of attention with a characteristic distinguishing the object of attention from other objects rendered in the second video image.

2. A data processing apparatus according to claim 1, wherein the characteristic comprises a level of detail, LOD, of the object of attention.

3. A data processing apparatus according to claim 1 or 2, wherein the characteristic comprises an indicator indicating the object of attention.

4. A data processing apparatus according to any preceding claim, wherein the attention data comprises a gaze position of each of the one or more first users.

5. A data processing apparatus according to claim 4, wherein the object of attention is an object in a three-dimensional, 3D, virtual world of the video game positioned along one or more rays associated with the respective gaze positions of the one or more first users.

6. A data processing apparatus according to claim 5, wherein the object in the 3D virtual world of the video game is determined to be the object of attention when positioned along each of the one or more rays within a first predetermined time period.

7. A data processing apparatus according to claim 5 or 6, wherein the object in the 3D virtual world of the video game is determined to be the object of attention when positioned along each of the one or more rays for at least a second predetermined time period.

8. A data processing apparatus according to any one of claims 5 to 7, wherein the object in the 3D virtual world of the video game is determined to be the object of attention when simultaneously positioned along each of the one or more rays for at least a third predetermined time period.

9. A data processing apparatus according to any one of claims 5 to 8, wherein the object in the 3D virtual world of the video game is determined to be the object of attention when the number of first users is at least a predetermined threshold number.

10. A data processing apparatus according to any preceding claim, wherein:
based on the attention data, the object of attention is assigned to one of a plurality of object salience levels; and
the characteristic is different for different object salience levels.

11. A data processing apparatus according to claim 10, wherein the circuitry is configured to generate map data representing a map of the 3D virtual world and an object salience level of each of a plurality of objects of the 3D virtual world.

12. A system comprising:
a data processing apparatus according to any preceding claim;
one or more second data processing apparatuses each associated with a respective one of the one or more first users; and
a third data processing apparatus associated with the second user; wherein the data processing apparatus is configured to:
receive the attention data from each of the one or more second data processing apparatuses; and
transmit the rendering control data to the third data processing apparatus.

13. A computer-implemented data processing method comprising:
receiving, for each of one or more first users of a video game, attention data indicative of a region of attention of each first user in a respective first video image of the video game;
determining, based on the attention data, an object of attention in the video game of the one or more first users; and
generating rendering control data to control, in a second video image of the video game generated for a second, different, user of the video game, rendering of the object of attention with a characteristic distinguishing the object of attention from other objects rendered in the second video image.

14. A program for controlling a computer to perform a method according to claim 13.

15. A computer-readable storage medium storing a program according to claim 14.
